# FASCICULE DE BREVET EUROPEEN

(11) **EP 2 176 625 B1**
(45) Date de publication et mention de la délivrance du brevet: **26.10.2011**
(21) Numéro de dépôt: 08827296.8
(22) Date de dépôt: 06.08.2008
(51) Int. Cl.: G01D 5/26, G01D 5/34, G01D 11/24

(54) **CAPTEUR**
SENSOR
SENSOR

(30) Priorité: 08.08.2007 FR 0705759
(43) Date de publication de la demande: 21.04.2010
(73) Titulaire: Optel Thevon, 93100 Montreuil (FR)
(72) Inventeur: THEVON, Pierre-Jean, F-94220 Charenton Le Pont (FR)
(74) Mandataire: Laget, Jean-Loup
(86) Numéro de dépôt international: PCT/FR2008/051463
(87) Numéro de publication internationale: WO 2009/022081

(56) Documents cités:
- EP-A- 0 731 459
- EP-A- 1 463 053

## Description

La présente invention a pour objets un capteur et un procédé de fonctionnement du capteur.

Un capteur à fibres optiques comporte généralement un boîtier de commande et une sonde optique reliée au boîtier de commande..

Pour permettre un contrôle visuel de l'état du capteur, il est connu de disposer un voyant lumineux, comportant par exemple une diode électroluminescente, sur un boîtier de commande du capteur.

Lorsque le capteur est un capteur à fibres optiques, une difficulté réside dans le réglage et le contrôle du fonctionnement du capteur lorsque l'extrémité libre de la sonde est disposée à une distance importante, par exemple environ 10m, du boîtier de commande et que l'opérateur ne peut pas voir le voyant lumineux au cours du montage et du réglage de la sonde. Cela est par exemple le cas lorsque la sonde est disposée dans un banc d'essais et que le boîtier de commande est disposé, à l'extérieur du banc, à proximité des systèmes d'acquisition.

De manière similaire, dans le cas d'un capteur destiné à être encastré, le voyant lumineux n'est généralement plus visible une fois que le capteur est mis en place et il ne permet donc pas un contrôle ultérieur du bon fonctionnement du capteur. L'opérateur peut alors être obligé de dégager le capteur de son logement, ce qui constitue une opération longue et difficile.

La présente invention a pour but de proposer un capteur et un procédé de fonctionnement du capteur qui évitent l'inconvénient précité et qui facilitent le montage et le réglage de la sonde même lorsque celle-ci est disposée à distance du boîtier de commande.

Selon EP 1 536 053, une diode laser à longueurs d'onde multiples est utilisée pour la lecture d'un disque optique. Si la lecture ne peut être assurée avec une première longueur d'onde, une deuxième longueur d'onde est utilisée.

Selon EP 0 731 459, la lecture de disques optiques multicouches est assurée par des faisceaux indépendants émis par des diodes laser à longueurs d'onde différentes.

L'invention a pour objet un capteur comportant un boîtier de commande et une sonde optique, ledit boîtier de commande comportant un émetteur apte à émettre en direction de ladite sonde optique un signal de mesure dans le proche infrarouge et un récepteur apte à recevoir, via ladite sonde optique, un signal de retour en réponse à l'émission dudit signal de mesure, **caractérisé en ce que** ledit émetteur est un émetteur à longueurs d'onde multiples apte à émettre un deuxième signal dans une longueur d'onde n'appartenant pas au proche infrarouge, ledit boîtier de commande comportant un module de traitement apte à commander sélectivement l'émission dudit deuxième signal simultanément audit signal de mesure en fonction d'un état du capteur déterminé à partir dudit signal de retour.

Avantageusement, ladite sonde optique comporte un ensemble de fibres optiques, une extrémité de chaque fibre optique étant reliée audit boîtier de commande.

Selon un mode de réalisation de l'invention, ledit deuxième signal est un signal visible.

Selon un autre mode de réalisation de l'invention, ledit deuxième signal est un signal ultraviolet.

Avantageusement, ledit module de traitement commande l'émission dudit deuxième signal en fonction de la qualité dudit signal de retour.

L'invention a également pour objet un procédé de fonctionnement d'un capteur comprenant un boîtier de commande et une sonde optique, ledit boîtier de commande comportant un émetteur et un récepteur, **caractérisé en ce qu'**il comprend les étapes consistant à :
a) commander l'émission par ledit émetteur, en direction de ladite sonde optique, d'un signal de mesure dans le proche infrarouge,
b) recevoir dans ledit récepteur, via ladite sonde optique, un signal de retour en réponse à l'émission dudit signal de mesure,
c) traiter ledit signal de retour et en déduire un état du capteur, et
d) en fonction de l'état du capteur déterminé à l'étape c), commander ou non l'émission par ledit émetteur, en direction de ladite sonde optique, d'un deuxième signal à une longueur d'onde n'appartenant pas au proche infrarouge, simultanément à l'émission dudit signal de mesure.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins :
- la figure 1 est une vue schématique fonctionnelle d'un capteur selon un premier mode de réalisation de l'invention ;
- la figure 2 est une vue schématique simplifiée en perspective du capteur de la figure 1 ;
- la figure 3 est une vue schématique simplifiée en perspective montrant une sonde optique du capteur de la figure 1 disposée au droit du bord d'un disque denté ; et
- la figure 4 est une vue similaire à la figure 3 montrant un deuxième mode de réalisation du capteur, dans lequel le capteur comporte une sonde en mode barrage, la sonde étant disposée de part et d'autre d'un disque ajouré.

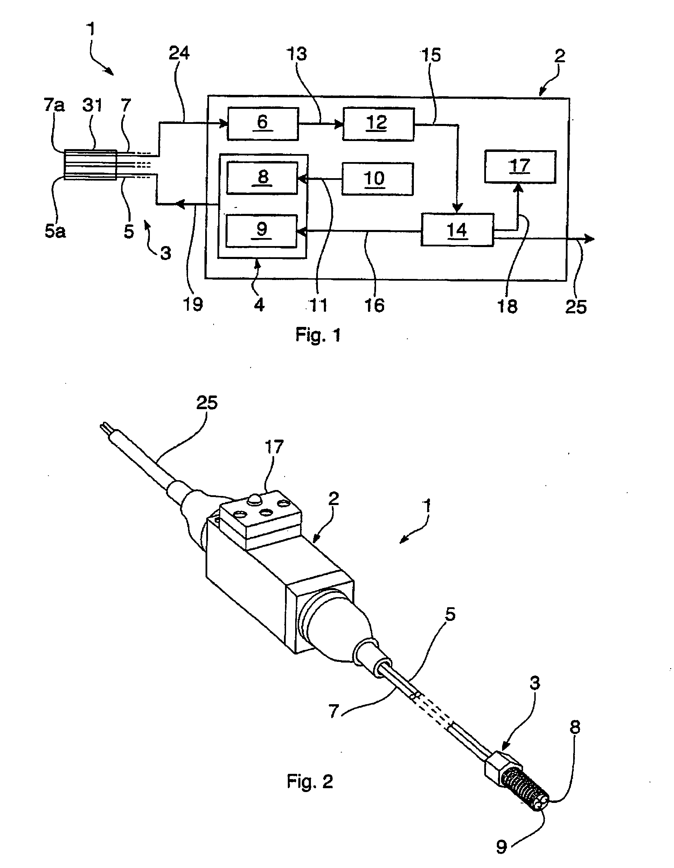

En se référant aux figures 1 et 2, on voit un capteur 1 à fibres optiques comportant un boîtier de commande 2 et une sonde optique 3.

La sonde 3 comporte deux fibres optiques 5 et 7 et un élément d'extrémité 31. L'élément 31 présente par exemple la forme d'un cylindre entourant une extrémité 5a de la fibre optique 5 et une extrémité 7a de la fibre optique 7.

Le boîtier de commande 2 comporte un émetteur 4, par exemple une diode électroluminescente (DEL), reliée à l'extrémité de la fibre optique 5 opposée à l'extrémité 5a. La sonde 3 comporte un récepteur 6, par exemple une photodiode ou un phototransistor, relié à l'extrémité de la fibre optique 7 opposée à l'extrémité 7a. La longueur de la sonde 3, c'est-à-dire la longueur des fibres optiques 5 et 7 dépend de l'application et peut être importante, par exemple de l'ordre d'une dizaine de mètres.

La diode 4 est une diode à longueurs d'onde multiples, comportant un module d'émission en proche infrarouge 8 et un module d'émission dans le visible 9, par exemple en lumière rouge, formant un émetteur quasi ponctuel. On appelle émetteur quasi ponctuel ou quasi stigmatique un semi-conducteur dont les puces sont suffisamment proches les unes des autres pour constituer avec une optique ou une fibre optique un système quasi centré au sens optique du terme ou, dans le cas d'une fibre optique, assurant un couplage correct. Une diode à longueurs d'onde multiples est par exemple décrite dans le document EP 1 655 814 et ne sera pas décrite en détails ici.

Le boîtier 2 comporte un module d'alimentation 10 apte à alimenter en énergie le module d'émission en proche infrarouge 8, comme cela est symbolisé par la flèche 11. En réponse à une alimentation en énergie, le module 8 émet un signal optique en proche infrarouge, comme cela est symbolisé par la flèche 19.

Le boîtier 2 comporte un amplificateur 12 destiné à amplifier un signal provenant du récepteur 6. L'amplificateur 12 reçoit en entrée le signal de sortie du récepteur 6, comme cela est symbolisé par la flèche 13. Par exemple, lorsque le capteur 1 est un capteur analogique, le signal de sortie de l'amplificateur 12 est proportionnel au signal d'entrée de l'amplificateur 12.

Le boîtier 2 comporte un module de traitement 14 recevant en entrée le signal de sortie de l'amplificateur 12, comme cela est symbolisé par la flèche 15. Le module de traitement 14 traite les données reçues et en déduit un état du capteur 1. En fonction de l'état du capteur 1, le module de traitement 14 commande ou non l'alimentation en énergie du module d'émission dans le visible 9, comme cela est symbolisé par la flèche 16. En réponse à une alimentation, le module 9 émet un signal optique dans le visible, ici un faisceau lumineux rouge, également symbolisé par la flèche 19. Le module de traitement 14 commande de manière similaire l'alimentation en énergie d'un voyant lumineux 17 du boîtier 2, comme cela est symbolisé par la flèche 18. Le voyant lumineux 17 comporte par exemple une diode électroluminescente émettant une lumière visible lorsqu'elle est alimentée en énergie.

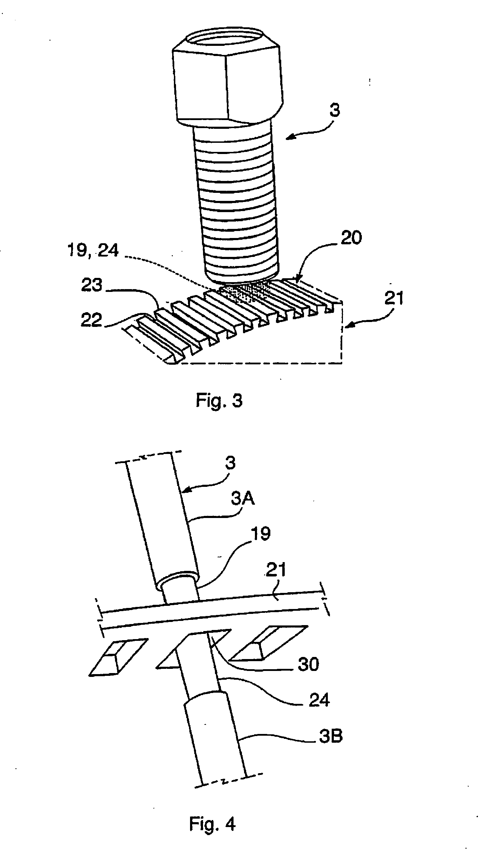

En se référant à la figure 3, on va maintenant décrire le fonctionnement du capteur 1. La sonde 3 est une sonde de proximité et son extrémité libre est disposée au droit du bord 20 d'un disque denté 21. Le bord 20 présente sur toute sa longueur une alternance de creux 22 et de dents 23.

Pendant toute la durée du fonctionnement du capteur 1, le module d'alimentation 10 alimente en continu le module 8. En d'autre termes, la diode 4 émet en permanence un signal optique en proche infrarouge. Le module 8 permet ainsi l'émission d'un signal de mesure via la fibre optique 5 de la sonde 3.

Cette émission a pour effet que le récepteur 6 reçoit un signal de retour 24, via la fibre optique 7 de la sonde 3, qui est fonction de la position du disque 21 par rapport à la sonde 3, c'est-à-dire de l'émission par le module 8 au droit d'un creux 22 ou d'une dent 23. Le récepteur 6 transmet un signal électrique 13 correspondant au signal de retour 24 en entrée de l'amplificateur 12.

L'amplificateur 12 amplifie le signal 13 reçu et transmet le signal amplifié 15 au module de traitement 14. Le module de traitement 14 traite le signal 15 et en déduit un état du capteur 1. Le module de traitement 14 détermine notamment la présence ou non d'un changement d'état du capteur 1. Dans l'exemple de la figure 3, un changement d'état du capteur 1 correspond au passage de la sonde 3 d'un creux 22 à une dent 23, ou inversement. Le module de traitement 14 génère un signal 25 d'état du capteur 1. Dans l'exemple représenté, le signal 25 a une forme de créneau, le signal 25 étant par exemple à '1' lorsque la sonde 3 se trouve au droit d'une dent 23 et à '0' lorsque la sonde 3 se trouve au droit d'un creux 22. Le signal 25 est par exemple transmis à destination d'un dispositif de contrôle (non représenté).

Simultanément, lorsque le module 14 détermine que le capteur 1 est dans un état prédéterminé, par exemple à '1', le module de traitement 14 commande l'alimentation du module d'émission dans le visible 9. Cela a pour effet que la diode 4 émet simultanément, via la fibre optique 5, un signal optique en proche infrarouge et un signal optique visible. L'extrémité de la sonde 3 devient ainsi un voyant lumineux de contrôle indiquant l'état du capteur 1. Cela facilite notamment les réglages ainsi que le centrage de la position de la sonde 3 par rapport à une cible, dans l'exemple le bord 20 du disque 21. Comme la longueur d'onde visible, ici le rouge, est émise par le même chemin optique que la longueur d'onde de travail, ici le proche infrarouge, l'opérateur peut directement contrôler le fonctionnement du capteur 1, ce qui évite d'avoir à utiliser le voyant 17 pour le réglage, ce voyant 17 n'étant pas toujours facilement visible pour un opérateur se trouvant au niveau de la sonde 3. En variante, le voyant 17 peut être supprimé.

On notera que, du fait de l'utilisation d'une diode à longueurs d'onde multiples, les signaux en proche infrarouge et visible peuvent être transmis dans une fibre optique 5 classique du type couramment disponible dans le commerce. Au contraire, si le signal en proche infrarouge et le signal visible étaient émis par deux diodes différentes, une fibre optique supplémentaire serait nécessaire pour émettre le deuxième signal, ou bien la fibre optique utilisée devrait être une fibre optique spéciale adaptée pour recevoir des signaux provenant de deux sources distinctes. La diode 4 permet donc de limiter le volume de la sonde 3, qui dépend du nombre de fibres optiques, et de limiter le coût du capteur 1, qui dépend notamment du nombre et du type de fibres optiques.

Le capteur 1 peut être utilisé dans le domaine des automatismes, de la mesure, des micros et nanotechnologies, de la médecine, de la défense, de la robotique, de la sécurité, ou autre. Il est particulièrement adapté lorsqu'une émission non ciblée présente des risques, par exemple dans le domaine médical, en assemblage, ou dans le domaine de la défense. Lorsqu'un opérateur souhaite vérifier le bon fonctionnement du capteur 1, il lui suffit de passer la main devant l'extrémité libre de la sonde 3, également appelée tête de la sonde 3, de manière à couper le faisceau. Cela entraîne un changement d'état du capteur 1 qui a pour effet l'allumage ou l'extinction de la lumière rouge par le module d'émission dans le visible 9.

Le signal de retour 24 capté par le récepteur 6 dépend notamment de la distance entre la tête de la sonde 3et la cible et de la position de la tête de la sonde 3 dans un plan parallèle à la cible. Pour optimiser la réception, il est donc important de bien positionner la tête de la sonde 3 par rapport à la cible. Selon un mode de réalisation de l'invention, le module de traitement 14 commande l'alimentation en énergie du module d'émission dans le visible 9 en fonction de la qualité du signal de retour 24. Ainsi, lorsque l'opérateur déplace la sonde 3 selon un axe perpendiculaire à la cible, le faisceau lumineux rouge émis par la diode 4 s'allume et s'éteint en fonction de la qualité de la réception, c'est-à-dire que lorsque la qualité de la réception dépasse un seuil pré-déterminé, la réception est considérée comme bonne et le faisceau rouge est allumé. De même, lorsque l'opérateur déplace la sonde 3 dans un plan parallèle à la cible, le faisceau lumineux rouge émis par la diode 4 s'allume et s'éteint en fonction de la qualité de la réception, qui dépend par exemple du passage d'une marque brillante à une marque noire. Cette caractéristique permet de faciliter le positionnement de la sonde 3 par une indication visuelle et intuitive. Cette caractéristique est particulièrement bien adaptée au cas d'une sonde placée au droit d'un disque (non représenté) dont une face présente des secteurs noirs et blancs, le disque étant fixé à l'extrémité d'un arbre moteur tournant à grande vitesse.

On notera que le capteur n'est pas nécessairement un capteur à fibres optiques. Par exemple, dans le cas de systèmes encastrés, tels que des systèmes de commande de portes automatiques et d'ascenseurs, seules les têtes optiques affleurent. La présence d'un voyant de fonctionnement dans la tête optique devient alors un témoin du bon fonctionnement du système.

Dans le cas de systèmes de sécurité et de protection des biens et des personnes, l'extinction du module d'émission dans le visible 9 peut être commandée à distance. Dans cet exemple, le module d'émission dans le visible 9 est utilisé pendant les réglages puis il est coupé lorsque l'alarme est fonctionnelle.

On notera que le nombre de longueurs d'onde de la diode 4 n'est pas limitatif et peut être supérieur à deux. La diode 4 peut par exemple comporter un module d'émission en proche infrarouge 8, un module d'émission en lumière rouge 9 et un module d'émission en lumière verte (non représenté). Dans ce cas, le module 8 est toujours utilisé pour émettre le signal optique de mesure et,les autres modules, notamment le module 9, sont utilisés comme voyant lumineux permettant un contrôle visuel du fonctionnement. La commande d'allumage ou d'extinction d'un ou de plusieurs modules formant le voyant lumineux peut dépendre de seuils ou de composantes analogiques du signal représentant l'état du capteur 1.

Le récepteur 6 peut comporter plusieurs filtres passe-bande pour être adapté aux différentes longueurs d'onde d'émission.

La figure 4 présente à titre d'exemple un deuxième mode de réalisation du capteur 1. Les éléments similaires au premier mode de réalisation sont désignés par le même numéro de référence et ne sont pas décrits à nouveau.

Ici, le capteur 1 comporte une sonde 3 en mode barrage, une extrémité de la fibre optique 5 étant disposée dans une première tête 3A de la sonde 3 et une extrémité de la fibre optique 7 étant disposée dans une deuxième tête 3B de la sonde 3. Le récepteur 6 reçoit un signal de retour 24 lorsque l'émetteur 4 émet le signal de mesure 19 au droit d'un trou 30 du disque 21. Le fonctionnement est similaire à ce qui a été décrit précédemment.

Selon un troisième mode de réalisation non représenté, la diode 4 comprend un module d'émission en ultraviolet en plus ou à la place du module d'émission dans le visible 9. Dans ce mode de réalisation, le module d'émission en proche infrarouge 8 est utilisé, comme précédemment, pour détecter la présence d'une pièce. Le module d'émission en ultraviolet permet de réaliser un collage lorsque la présence d'une pièce a été détectée, la puissance du module d'émission en ultraviolet peut être régulée en fonction de paramètres analogiques du capteur 1. Cela permet d'obtenir un dispositif de détection et de collage particulièrement compact et auto-adaptatif.

Le capteur 1 permet ainsi de cumuler les avantages de plusieurs longueurs d'onde dans un dispositif compact. Par exemple, le proche infrarouge permet d'obtenir un signal optique plus puissant dans lequel il est plus facile de filtrer les parasites lumineux environnants, et une émission dans le visible permet de faciliter le réglage.

Bien que l'invention ait été décrite en relation avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Capteur comportant un boîtier de commande (2) et une sonde optique (3), ledit boîtier de commande (2) comportant un émetteur (4) apte à émettre en direction de ladite sonde optique (3) un signal de mesure (19) dans le proche infrarouge et un récepteur (6) apte à recevoir, via ladite sonde optique (3), un signal de retour (24) en réponse à l'émission dudit signal de mesure (19), **caractérisé en ce que** ledit émetteur (4) est un émetteur à longueurs d'onde multiples apte à émettre un deuxième signal dans une longueur d'onde n'appartenant pas au proche infrarouge, ledit boîtier de commande (2) comportant un module de traitement (14) apte à commander sélectivement l'émission dudit deuxième signal simultanément audit signal de mesure en fonction d'un état du capteur (1) déterminé à partir dudit signal de retour (24).

2. Capteur selon la revendication 1, **caractérisé en ce que** ladite sonde optique comporte un ensemble de fibres optiques (5, 7), une extrémité de chaque fibre optique étant reliée audit boîtier de commande (2).

3. Capteur selon la revendication 1, **caractérisé en ce que** ledit deuxième signal est un signal visible.

4. Capteur selon la revendication 1, **caractérisé en ce que** ledit deuxième signal est un signal ultraviolet.

5. Capteur selon l'une quelconque des revendications 1 à 4, **caractérisé en ce que** ledit module de traitement (14) commande l'émission dudit deuxième signal en fonction de la qualité dudit signal de retour (24).

6. Procédé de fonctionnement d'un capteur (1) comprenant un boîtier de commande (2) et une sonde optique (3), ledit boîtier de commande (2) comportant un émetteur (4) et un récepteur (6), **caractérisé en ce qu'**il comprend les étapes consistant à :
a) commander l'émission par ledit émetteur (4), en direction de ladite sonde optique (3), d'un signal de mesure (19) dans le proche infrarouge,
b) recevoir dans ledit récepteur (6), via ladite sonde optique (3), un signal de retour (24) en réponse à l'émission dudit signal de mesure (19),
c) traiter ledit signal de retour (24) et en déduire un état du capteur (1), et
d) en fonction de l'état du capteur (1) déterminé à l'étape c), commander ou non l'émission par ledit émetteur (4), en direction de ladite sonde optique, d'un deuxième signal à une longueur d'onde n'appartenant pas au proche infrarouge, simultanément à l'émission dudit signal de mesure.

## Claims

1. A sensor comprising a control housing (2) and an optical probe (3), said control housing (2) comprising a transmitter (4) capable of transmitting in the direction of said optical probe (3) a measurement signal (19) in the near infrared and a receiver (6) capable of receiving, via said optical probe (3), a return signal (24) in response to the transmission of said measurement signal (19), **characterized in that** said transmitter (4) is a multiple wavelength transmitter capable of transmitting a second signal in a wavelength not belonging to the near infrared, said control housing (2) comprising a processing module (14) capable of selectively controlling the transmission of said second signal at the same time as said measurement signal according to a state of the sensor (1) determined from said return signal (24).

2. The sensor as claimed in claim 1, **characterized in that** said optical probe comprises a set of optical fibers (5, 7), one end of each optical fiber being connected to said control housing (2).

3. The sensor as claimed in claim 1, **characterized in that** said second signal is a visible signal.

4. The sensor as claimed in claim 1, **characterized in that** said second signal is an ultraviolet signal.

5. The sensor as claimed in any one of claims 1 to 4, **characterized in that** said processing module (14) controls the transmission of said second signal according to the quality of said return signal (24).

6. A method for operating a sensor (1) comprising a control housing (2) and an optical probe (3), said control housing (2) comprising a transmitter (4) and a receiver (6), **characterized in that** it comprises the steps consisting in:
a) controlling the transmission by said transmitter (4), in the direction of said optical probe (3), of a measurement signal (19) in the near infrared,
b) receiving in said receiver (6), via said optical probe (3), a return signal (24) in response to the transmission of said measurement signal (19),
c) processing said return signal (24) and deducing therefrom a state of the sensor (1), and
d) according to the state of the sensor (1) determined in step c), controlling or not controlling the transmission by said transmitter (4), in the direction of said optical probe, of a second signal at a wavelength not belonging to the near infrared, at the same time as the transmission of said measurement signal.

## Patentansprüche

1. Sensor, der einen Schaltkasten (2) und eine optische Sonde (3) umfasst, wobei der Schaltkasten (2) einen Sender (4) umfasst, der imstande ist, in Richtung der optischen Sonde (3) ein Messsignal (19) im nahen Infrarot zu senden, und einen Empfänger (6), der imstande ist, über die optische Sonde (3) eine Rückmeldung (24) als Antwort auf das Senden des Messsignals (19) zu senden, **dadurch gekennzeichnet, dass** der Sender (4) ein Mehrfachwellenlängensender ist, der imstande ist, ein zweites Signal in einer Wellenlänge zu senden, die nicht zum nahen Infrarot gehört, wobei der Schaltkasten (2) ein Verarbeitungsmodul (14) aufweist, das imstande ist, selektiv das Senden des zweiten Signals gleichzeitig mit dem Messsignal in Abhängigkeit eines Zustands des Sensors (1) zu steuern, der auf der Basis der Rückmeldung (24) bestimmt wurde.

2. Sensor nach Anspruch 1, **dadurch gekennzeichnet, dass** die optische Sonde eine Gruppe optischer Fasern (5, 7) aufweist, wobei ein Ende jeder optischen Faser mit dem Schaltkasten (2) verbunden ist.

3. Sensor nach Anspruch 1, **dadurch gekennzeichnet, dass** das zweite Signal ein sichtbares Signal ist.

4. Sensor nach Anspruch 1, **dadurch gekennzeichnet, dass** das zweite Signal ein ultraviolettes Signal ist.

5. Sensor nach einem der Ansprüche 1 bis 4, **dadurch gekennzeichnet, dass** das Verarbeitungsmodul (14) das Senden des zweiten Signals in Abhängigkeit von der Qualität der Rückmeldung (24) steuert.

6. Verfahren für die Funktion eines Sensors (1), der einen Schaltkasten (2) und eine optische Sonde (3) umfasst, wobei der Schaltkasten (2) einen Sender (4) und einen Empfänger (6) aufweist, **dadurch gekennzeichnet, dass** es die Schritte umfasst, die bestehen im:
a) Befehlen des Sendens eines Messsignals (19) im nahen Infrarot in Richtung der optischen Sonde (3) durch den Sender (4),
b) Empfangen, über die optische Sonde (3), einer Rückmeldung (24) im Empfänger (6) als Antwort auf das Senden des Messsignals (19),
c) Verarbeiten der Rückmeldung (24) und Ableiten daraus eines Zustands des Sensors (1), und
d) Befehlen, in Abhängigkeit von dem in Schritt c) bestimmten Zustand des Sensors (1), des Sendens eines zweiten Signals mit einer Wellenlänge, die nicht zum nahen Infrarot gehört, gleichzeitig mit dem Senden des Messsignals, durch den Sender (4) in Richtung der optischen Sonde, oder nicht.
